# EUROPEAN PATENT APPLICATION

(11) **EP 1 063 072 A1**
(43) Date of publication of application: **27.12.2000**
(21) Application number: 00113249.7
(22) Date of filing: 21.06.2000
(51) Int. Cl.: B29C 45/76, B29C 45/42

(54) **Apparatus for taking out molded products**

(30) Priority: 22.06.1999 JP 17577199
(71) Applicant: Kabushiki Kaisha Yushin Seiki, Kyoto-shi, Kyoto-fu, 612 8492 (JP)
(72) Inventor: Hidekatzu, Ito, Yushin Seiki K.K., Kyoto-shi, Kyoto-fu, 612-8492 (JP)
(74) Representative: Leson, Thomas Johannes Alois, Dipl.-Ing.

(57) **Abstract**

An apparatus for taking out a molded product in which a molded product is taken out after die opening and liberated at a specified retrieving position outside die halves, the apparatus comprising: a vibration sensor 8 for detecting the vibrating condition of the retaining mechanism unit 7 when the retaining mechanism unit 7 stops at a stopping position for the retaining mechanism unit 7 in a preceding process; an arithmetic operation unit 12 for calculating an optimum speed distribution which restricts the vibrating condition; and a positioning controller 11 for activating the moving mechanism unit 5 so as to move the retaining mechanism unit 7 according to the optimum speed distribution in a process succeeding the preceding process, whereby the vibration of the retaining mechanism unit, which occurs when the retaining mechanism unit holding the molded product stops at a specified stopping position, is restricted.

## Description

### Background of the Invention

### Field of the Invention

The present invention relates to the technical field of apparatus for taking a molded product out of die halves by insertion of a retaining mechanism unit for holding a molded product between the die halves after die opening, for instance, in an injection molding machine.

### Disclosure of the Prior Art

The basic operation of an injection molding machine is as follows. The die halves are clamped and then, a resin is injected into a mold cavity. After cooling of the resin, the die halves are opened. Thereafter, a molded product is taken out by a take-out apparatus such as a molded product take-out robot and subsequently, the die halves are again clamped. Such a cycle is repeatedly carried out.

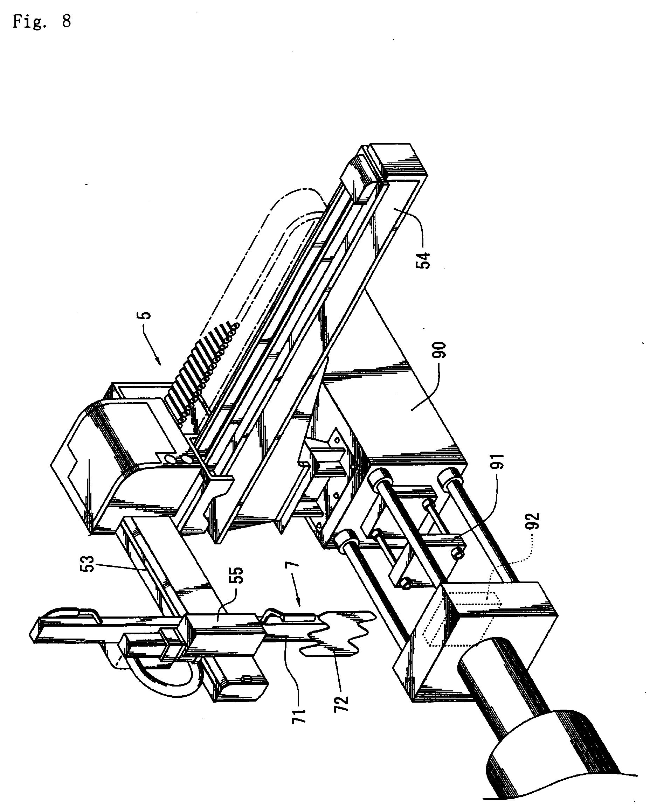

As shown in FIGURE 8, the above-described molded product take-out apparatus is disposed, for instance, above a molding machine 90 having die halves 91, 92 attached thereto and comprises a retaining mechanism unit 7 for holding a molded product and a moving mechanism unit 5 for moving the retaining mechanism unit 7.

In this take-out apparatus, the retaining mechanism unit 7 includes a pick-up head 72 for holding a molded product and an arm mechanism unit 71 having the pick-up head 72 attached to its distal end. The moving mechanism unit 5 includes lateral moving mechanism units 53, 54 for allowing lateral movement of the retaining mechanism unit 7 and a lifting/lowering mechanism unit 55 for allowing ascent and descent of the retaining mechanism unit 7.

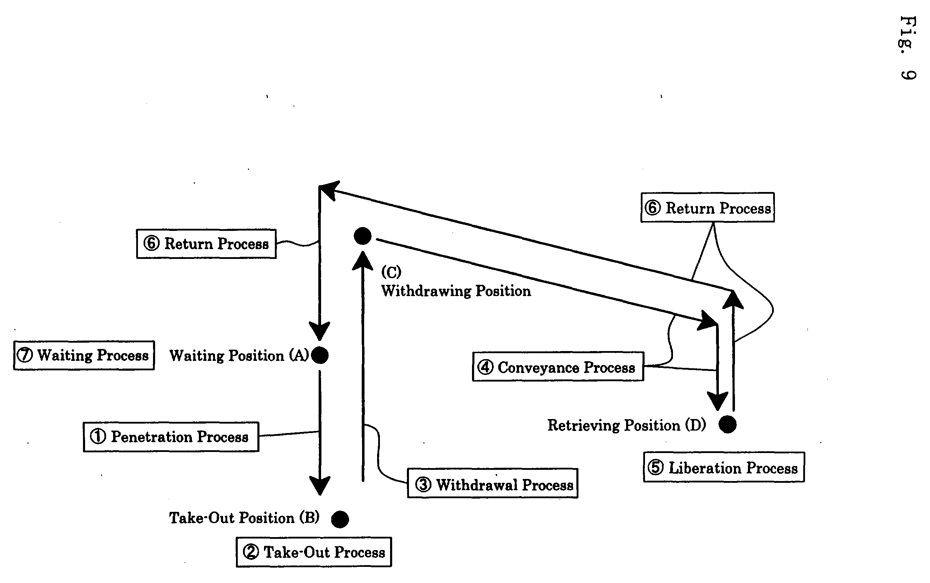

The molded product take-out operation of the above take-out apparatus is carried out as shown in FIGURE 9 according to which, the die halves 91, 92 are first opened and then, the retaining mechanism unit 7 which has been waiting at a waiting position (A) is allowed to penetrate between the die halves 91, 92. Thereafter, the retaining mechanism unit 7 is moved to a molded product take-out position (B) and stopped upon arrival at the take-out position (B) (① penetration process). At the take-out position (B), the retaining mechanism unit 7 seizes the molded product which has been separated from the die halves 91, 92 by means of the pick-up head 72 (② take-out process). Subsequently, the retaining mechanism unit 7 holding the molded product is moved from the take-out position (B) to a withdrawing position (C) which is outside the die halves 91 and 92 (③ withdrawal process). Then, the retaining mechanism unit 7 with a molded product held thereby is moved from the withdrawing position (C) to a retrieving position (D) where the molded product is to be released. Upon arrival at the retrieving position (D), the retaining mechanism unit 7 is stopped (④ conveyance process). At the retrieving position (D), the retaining mechanism unit 7 liberates the molded product for retrieval (⑤ liberation process). Upon completion of the liberation of the molded product at the retrieving position (D), the retaining mechanism unit 7 is moved from the retrieving position (D) to the waiting position (A)(⑥ return process) and then the retaining mechanism unit 7 is allowed to wait at the waiting position (A) until the next take-out of a molded product starts (⑦ waiting process).

The moving speed of the retaining mechanism unit 7 in each process is set beforehand such that each process can be finished in good time for starting the next cycle of the molded product take-out operation. Therefore, the time required for one cycle of the take-out operation does not exceed the time required for one molding cycle for the molding machine 90.

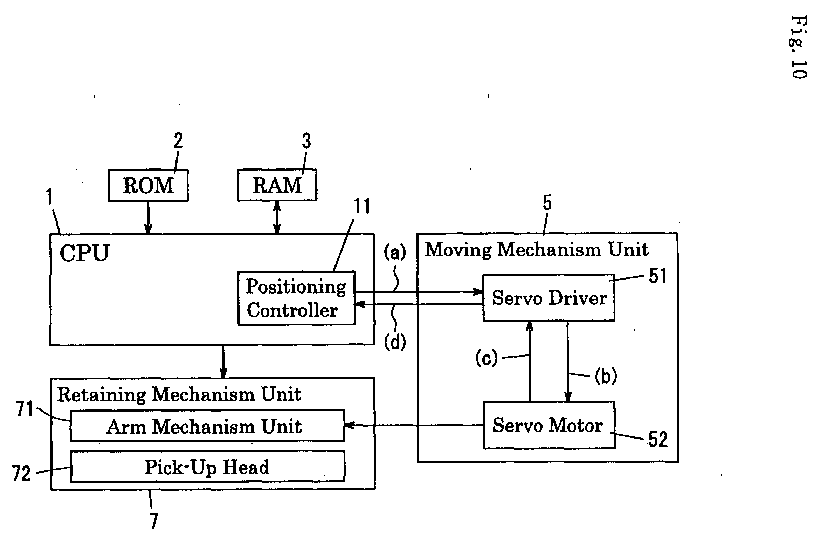

FIGURE 10 is a block diagram showing the inner structure of a conventional take-out apparatus which comprises the moving mechanism unit 5, the retaining mechanism unit 7 and a CPU 1 for controlling these units.

Data on the moving speed of the retaining mechanism unit 7 in each process is prestored in a RAM 3 or in the internal memory of the CPU 1. For moving the retaining mechanism unit 7, a speed command signal (a) based on the above speed data is outputted from a positioning controller 11 incorporated in the CPU 1 to a servo driver 51 of the moving mechanism unit 5. The servo driver 51 outputs a drive signal (b) to a servo motor 52 based on the speed command signal (a), thereby driving the servo motor 52. Since this servo motor 52 is coupled to the aim mechanism unit 71 of the retaining mechanism unit 7, the retaining mechanism unit 7 is moved by the driving of the servo motor 52.

It should be noted that the servo driver 51 and the servo motor 52 constitute a loop circuit and rotational frequency data (c) indicative of the rotational frequency of the servo motor 52 is fed back to the servo driver 51 by an encoder (not shown) provided for the servo motor 52 thereby to perform feed back control. The servo driver 51 and the positioning controller 11 also constitute a loop circuit and the servo driver 51 converts the rotational frequency data (c) into positional data (d) which is fed back to the positioning controller 11 thereby performing feed back control.

In this way, the retaining mechanism unit 7 is moved based on a speed command signal (a) sent from the CPU 1 and its moving speed is getting faster with the speed-up of the molding cycle of the molding machine 90. If the pick-up head 72 of the retaining mechanism unit 7 is replaced to cope with alteration of molded products to be produced, the retaining mechanism unit 7 is moved under the same speed condition as the condition adopted before the replacement, or fine control of the moving speed is manually carried out.

To avoid interference with the molding cycle in the event of a prolonged take-out cycle of the take-out apparatus, the above moving speed is set to be somewhat faster. This causes an abrupt stop when stopping the retaining mechanism unit 7. As a result, the retaining mechanism unit 7 considerably shakes at each of the stopping positions (A), (B), (C) and (D) shown in FIGURE 9.

The vibration of the retaining mechanism unit 7 sometimes causes the following troubles: At the take-out position (B) which is one of the stopping positions, the molded product being taken out is dropped or the pick-up head 72 touches the faces of the die halves 91, 92, giving damage to them. At the retrieving position (D) which is another stopping position, the molded product sometimes cannot be properly released to a specified releasing point or the molded product cannot be properly stacked when being stacked for retrieval. If the retaining mechanism unit 7 significantly vibrates at the withdrawing position (C), the molded product held by the pick-up head 72 is likely to be dropped. Further, if the retaining mechanism unit 7 significantly vibrates at the waiting position (A), it continues to vibrate during the penetration between the die halves 91, 92, which causes a likelihood of the contact of the pick-up head 72 with the die halves 91, 92.

### Summary of the Invention

A primary object of the invention is to restrict the vibration of a retaining mechanism unit when it stops at a specified stopping position in an apparatus for taking out a molded product which comprises a retaining mechanism unit for holding a molded product and a moving mechanism unit for moving the retaining mechanism unit and in which the retaining mechanism unit is allowed to penetrate between die halves from a specified waiting position after die opening to take out a molded product and the molded product is liberated at a specified retrieving position outside the die halves.

The above object can be accomplished by an apparatus for taking out a molded product according to the present invention, the apparatus comprising:
vibration detecting means for detecting the vibrating condition of the retaining mechanism unit when the retaining mechanism unit stops at a stopping position for the retaining mechanism unit in a preceding process;
arithmetic means for calculating an optimum speed distribution as a speed distribution of the retaining mechanism unit when moving from a movement starting position to the stopping position, the optimum speed distribution restricting the maximum vibration value of the retaining mechanism unit in a vibrating condition within a specified range; and
instructing means for activating the moving mechanism unit so as to move the retaining mechanism unit according to the optimum speed distribution in a process succeeding the preceding process.

The above technical means function in the following manner.

In the preceding process, that is, initializing operation in which the retaining mechanism unit is moved at a preset moving speed, when the retaining mechanism unit has been moved from the waiting position (movement starting position) to the molded product take-out position (stopping position) located between the die halves, the retaining mechanism unit stops at this take-out position (stopping position). In this case, if the retaining mechanism unit stops vigorously, it shakes for a while. At that time, the vibration detecting means detects the vibrating condition of the retaining mechanism unit. Then, the arithmetic means receives data on the vibrating condition from the vibration detecting means and calculates an optimum speed distribution for the retaining mechanism unit moving from the waiting position (movement starting position) to the take-out position (stopping position). The optimum speed distribution is so calculated as to restrict the maximum vibration value of the retaining mechanism unit in its vibrating condition within a specified range.

In a process which takes place succeeding the preceding process, the moving mechanism unit is activated by the instructing means so as to move the retaining mechanism unit based on the optimum speed distribution. With this arrangement, the vibration of the retaining mechanism unit is restricted at the take-out position (stopping position).

While the molded product take-out position is set as the stopping position in the foregoing description, it is possible to choose other positions where the retaining mechanism unit stops, as the stopping position. At these positions, the vibrating condition can be similarly detected and the optimum speed distribution which cancels the vibrating condition can be calculated to activate the moving mechanism unit according to the optimum speed distribution in the succeeding process.

The invention is arranged as described above and therefore has the following inherent features.

The vibration of the retaining mechanism unit when stopping at the specified stopping position can be restricted by activating the moving mechanism unit according to the optimum speed distribution. Hence, the take-out and liberation of the molded product can be more accurately, reliably carried out and the die halves can be prevented from damage which would be caused due to the vibration of the retaining mechanism unit.

Other objects, features, aspects and advantages of the invention will become more apparent from the following detailed description of embodiments with reference to the accompanying drawings.

### Brief Description of the Drawings

FIGURE 1 is a block diagram showing the inner structure of an apparatus for taking out a molded product according to a first embodiment of the invention.
FIGURE 2 is a schematic diagram showing a retaining mechanism unit 7 in the molded product take-out apparatus of the first embodiment.
FIGURE 3 is a flow chart illustrating the operation of the molded product take-out apparatus of the first embodiment.
FIGURE 4 is a speed graph showing an optimum speed distribution calculated by an arithmetic operation unit 12.
FIGURE 5 is an acceleration graph showing a vibrating condition detected by a vibration sensor 8 (vibration detecting means).
FIGURE 6 is a block diagram showing the inner structure of a molded product take-out apparatus constructed according to second and third embodiments.
FIGURE 7 is a graph showing another example of the optimum speed distribution shown in FIGURE 4.
FIGURE 8 is a perspective view showing the whole structure of the molded product take-out apparatus.
FIGURE 9 is an operation chart showing the basic actions of the take-out operation of the molded product take-out apparatus.
FIGURE 10 is a block diagram showing the inner structure of a conventional molded product take-out apparatus.

### Detailed Description of the Embodiments

Referring now to the drawings, preferred embodiments of the invention will be hereinafter described.

### [First Embodiment]

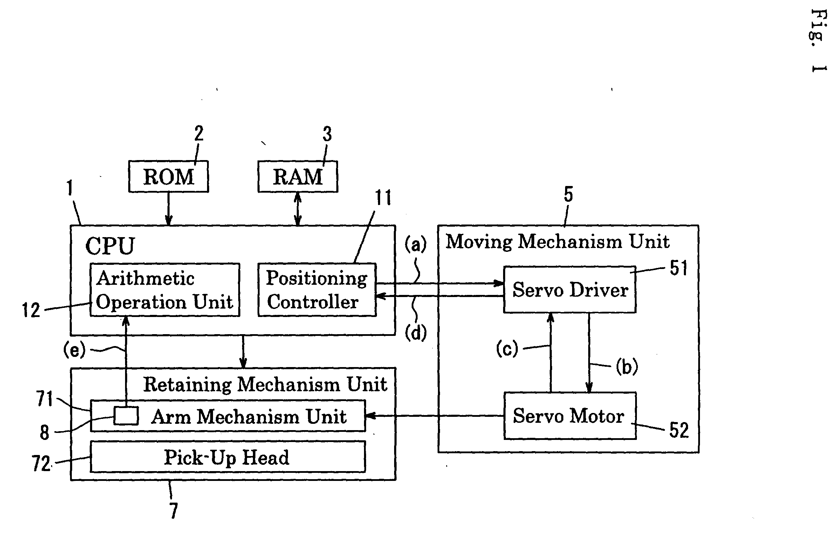

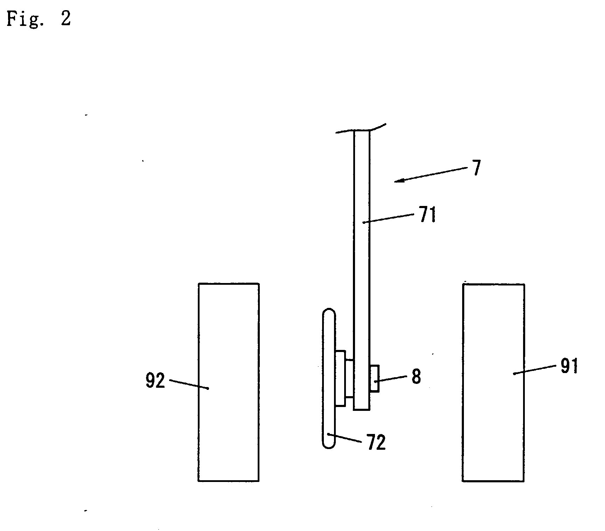

FIGURE 1 is a block diagram showing the inner structure of an apparatus for taking out a molded product according to a first embodiment of the invention and FIGURE 2 is a schematic diagram showing a retaining mechanism unit 7 of the take-out apparatus.

The whole structure of the molded product take-out apparatus of the first embodiment is shown in FIGURE 8, whereas the basic actions of its take-out operation are shown in FIGURE 9. Since details have been described earlier in the column of "DISCLOSURE OF THE PRIOR ART", they are omitted from the following description.

Referring to FIGURE 1, the molded product take-out apparatus of the first embodiment comprises the retaining mechanism unit 7 for taking a molded product out of molded halves, a moving mechanism unit 5 for moving the retaining mechanism unit 7 and a CPU 1 for controlling them.

The retaining mechanism unit 7 is composed of an arm mechanism unit 71 and a pick-up head 72 attached to the distal end of the arm mechanism unit 71.

The molded product is held by adsorption, chucking or clamping (pinching) by use of the pick-up head 72. Coupled to the proximal end of the arm mechanism unit 71 is the moving mechanism unit 5 so that the retaining mechanism unit 7 is moved. As vibration detecting means, a vibration sensor 8 is attached to the distal end of the arm mechanism unit 71.

The vibration sensor 8 is used for detecting the vibrating condition of the retaining mechanism unit 7 when it stops at a specified stopping position in a preceding process, that is, an initializing operation. In this embodiment, the vibration sensor 8 is attached to the distal end of the arm mechanism unit 71 at the side opposite to the pick-up head 72, as shown in FIGURE 2. The vibration sensor 8 may be attached to other areas as far as it does not interfere with the attachment of the pick-up head 72, the other areas including sides on which the pick-up head 72 is not mounted and the tip of the arm mechanism unit 71.

In this example, the vibration sensor 8 directly detects the vibrating condition of the pick-up head 72, so that the vibrating condition of the pick-up head 72 can be more accurately detected and therefore the vibration of the pick-up head 72 which directly holds the molded product can be more reliably restricted.

As the vibration sensor 8, a mounted-on-substrate type sensor with a connector pin, for instance, may be used. The vibration sensor of this type is attached in such a way that a mounting substrate is attached, beforehand, to the distal end of the arm mechanism unit 71 at a specified mounting position and the connector pin of the vibration sensor 8 is inserted into and fixed to the mounting substrate. The mounting substrate is wire-connected to the CPU 1 and data on the vibrating condition of the pick-up head 72 detected by the vibration sensor 8 are sent to the CPU 1. As the vibration sensor 8, an acceleration sensor of the piezo-electric type is suitably used which utilizes a piezo-electric element for outputting an electric signal proportional to the acceleration of an object to be measured. In addition to the above acceleration sensor, there may be used various types of vibration sensors such as: (i) capacitance type sensors which detect the amount of displacement of an object from the capacitance of a capacitor; (ii) eddy current type sensors which detect the amount of displacement of an object from the eddy current of a coil to which a high frequency current flows; and (iii) laser type sensors which detect the amount of displacement of an object from the convergence point of a laser. Further, the vibrating condition may be detected from a picture image taken by a microminiature camera attached to the arm mechanism unit 71.

The moving mechanism unit 5 includes, as shown in FIGURE 8, lateral moving mechanism units 53, 54 for allowing lateral movement of the retaining mechanism unit 7 and a lifting/lowering mechanism unit 55 for allowing ascent and descent of the retaining mechanism unit 7. These mechanism units 53, 54 and 55 each have a servo driver 51 and a servo motor 52, as shown in FIGURE 1.

One example of the servo motor 52 is a brushless AC servo motor which serves as an actuator for driving each of the mechanism units 53, 54 and 55. Although not shown in the drawings, the servo motor 52 is provided with an encoder for detecting the rotational frequency of the motor and rotational frequency data (c) indicative of the rotational frequency of the motor is fed back to the servo driver 51 by this encoder.

In response to a speed command signal (a) from the CPU 1, the servo driver 51 performs feed back control by outputting a drive signal (b) to the servo motor 52 to drive the servo motor 52. Specifically, the servo driver 51 contains a comparison/controlling amplifier (not shown) and a power amplifier (not shown) and constitutes a loop circuit together with the servo motor 52. The servo driver 51 performs signal processing on the difference between the speed command signal (a) input from the CPU 1 through the comparison/controlling amplifier and the rotational frequency data (c) fed back from the servo motor 52 and outputs the difference signal amplified by the power amplifier to the servo motor 52 as the drive signal (b).

The CPU 1 performs signal processing based on a program prestored in a ROM 2 and various data stored in a RAM 3 to control the whole take-out apparatus. The CPU 1 contains a positioning controller 11 (instructing means) and an arithmetic operation unit (arithmetic means) 12.

The arithmetic operation unit 12 is an arithmetic means composed of a microprocessor and its associated software and has the so-called learning function. The arithmetic operation unit 12 calculates an optimum speed distribution which restricts the maximum vibration value of the vibrating condition within a specified range, based on data (e) indicative of the vibrating condition of the retaining mechanism unit 7 detected by the vibration sensor 8 attached to the arm mechanism unit 71.

The optimum speed distribution calculated herein is given as a speed distribution of the retaining mechanism unit 7, covering the range after the retaining mechanism unit 7 starts its movement until it stops at a specified stopping position.

The above specified range varies depending on the type of the molded product to be taken out and may be properly selected from a range of 20% to 50% of the maximum vibration value indicated by the vibrating condition data (e). The optimum speed distribution which enables the maximum vibration value to be limited within such a specified range is arranged, for instance, such that the ratio of the deceleration gradient of the whole period or the final stage to the deceleration gradient of the initial setting becomes coincident with the ratio of the specified range for the maximum vibration value. In this case, the moving distance of the retaining mechanism unit 7 is not changed and therefore the arithmetic operation unit 12 performs arithmetic operation such that the area of the region enclosed by the speed distribution curve of the initial setting becomes coincident with the area of the region enclosed by the curve of the optimum speed distribution.

The positioning controller 11 is an instructing means for outputting a speed command signal (a) to the servo driver 51 of the moving mechanism unit 5 in order that the retaining mechanism unit 7 should move in accordance with the optimum speed distribution. The positioning controller 11 contains a comparison/control amplifier (not shown) and constitutes a loop circuit together with the servo driver 51. The comparison/control amplifier performs signal processing on the difference between the optimum speed distribution calculated by the arithmetic operation unit 12 and positional data (d) fed back from the servo driver 51 and this difference signal is amplified and outputted to the servo driver 51 of the moving mechanism unit 5 as the speed command signal (a).

Next, the operation of the molded product take-out apparatus will be explained.

In the following description, the take-out position (B) is determined as the specified stopping position and the optimum speed distribution is associated with the moving speed during the penetration process ① in which the retaining mechanism unit 7 moves from the waiting position (A) to the take-out position (B).

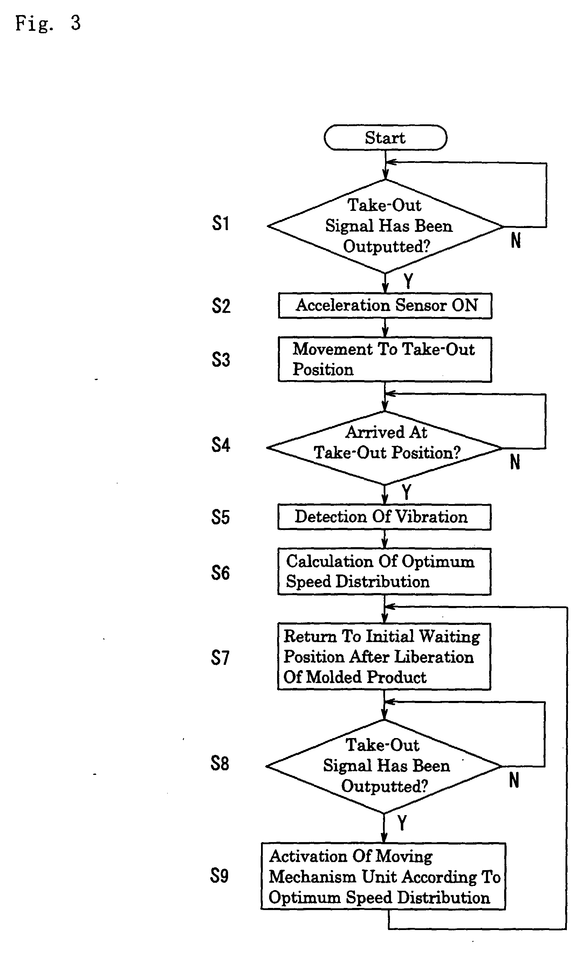

FIGURE 3 is a flow chart of the operation of the take-out apparatus and each time a new molding process is carried out, initialization (the retaining mechanism unit 7 is moved at a moving speed preset by the operator) is performed as a preceding process. Referring to FIGURE 3, at Step S1, a check is first made to determine whether die opening has been completed, outputting a take-out signal from the molding machine. If it is determined that a take-out signal has been outputted, the program proceeds to Step S2.

At Step S2, the vibration sensor 8 attached to the arm mechanism unit 71 of the retaining mechanism unit 7 is activated and then the program proceeds to Step S3.

At Step S3, the moving mechanism unit 5 starts to move the retaining mechanism unit 7 from the waiting position (A) to the take-out position (B) located between the die halves.

At Step S4, it is determined whether the retaining mechanism unit 7 has reached the take-out position (B) and if so, the moving mechanism unit 5 then stops the retaining mechanism unit 7 and the program proceeds to Step S5. At that time, the retaining mechanism unit 7 is brought to an abrupt stop so that it shakes for a while at the take-out position (B).

At Step S5, the vibrating condition of the retaining mechanism unit 7 is detected by the vibration sensor 8 attached to the arm mechanism unit 71 of the retaining mechanism unit 7.

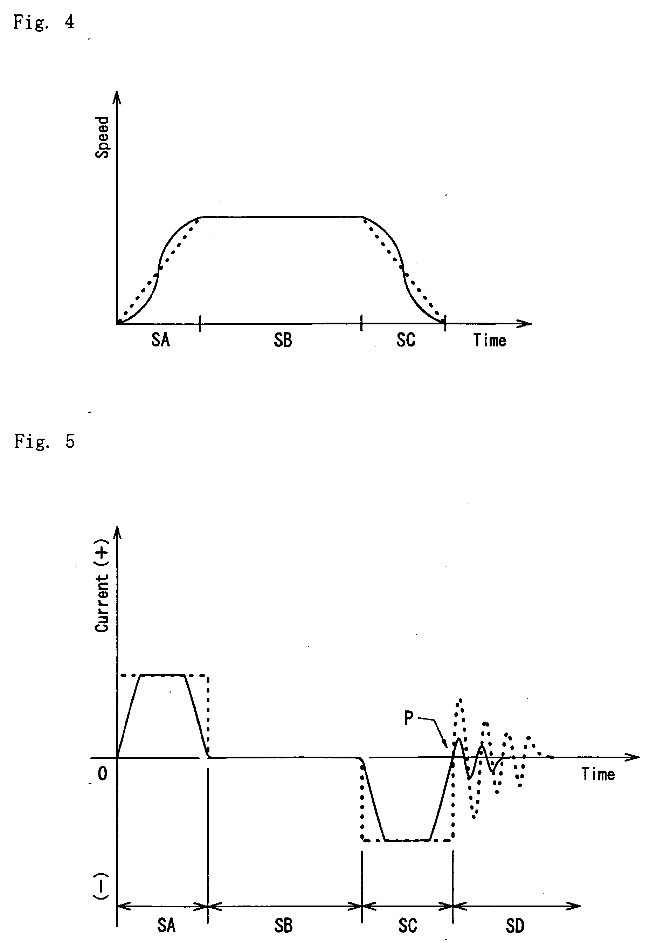

The vibrating condition is concretely shown in the graph of FIGURE 5.

FIGURE 5 is an acceleration graph showing the acceleration/deceleration condition of the retaining mechanism unit 7 when it moves from the waiting position (A) to the take-out position (B). This graph is based on the relationship between "current and time" when a piezo-electric type acceleration sensor is used as the vibration sensor 8. The vibrating condition and acceleration/deceleration condition of the retaining mechanism unit 7 are represented by a current value corresponding to the rate of acceleration/deceleration of the retaining mechanism unit 7 (the object to be detected) to which the vibration sensor 8 is attached. Referring to FIGURE 5, there exist an acceleration zone (SA), constant speed zone (SB), deceleration zone (SC) and stopping zone (SD) (vibration zone) in this example. During the initializing operation, the retaining mechanism unit 7 is accelerated at a constant rate in the acceleration zone (SA) as indicated by dot line in FIGURE 5 so that a constant positive current value is outputted from the vibration sensor 8. When the retaining mechanism unit 7 enters the constant speed zone (SB), its acceleration becomes zero so that the vibration sensor 8 does not output current. In the deceleration zone (SC), the retaining mechanism unit 7 is decelerated at a constant rate so that the vibration sensor 8 outputs a constant negative current value. In the stopping zone (SD), positive and negative current values are outputted in the form of an amplitude waveform which attenuates with time. This means that the retaining mechanism unit 7 vibrates.

More specifically, when vibration occurs, acceleration and deceleration are repeated so that current values from the vibration sensor 8 take an amplitude waveform such as shown in FIGURE 5. The vibrating condition of the retaining mechanism unit 7 thus detected by the vibration sensor 8 is inputted to the arithmetic operation unit 12 of the CPU 1.

At Step S6, the arithmetic operation unit 12 receives the data (e) on the vibrating condition from the vibration sensor 8 and calculates an optimum speed distribution which eliminates the vibrating condition. The calculation of the optimum speed distribution is carried out, for instance, according to FIGURE 4.

FIGURE 4 is a speed graph showing the speed condition of the retaining mechanism unit 7 when it moves front the waiting position (A) to the take-out position (B).

Referring to FIGURE 4, the speed distribution of the moving speed preset by the operator is represented by a trapezoidal curve which is constituted by an acceleration zone (SA) ascending diagonally to the right, a flat constant speed zone (SB) and a deceleration zone (SC) descending diagonally to the right, as indicated by dot line in FIGURE 4 (these zones correspond to the zones (SA), (SB) and (SC), respectively, in FIGURE 5). Although the speed distribution is set in the form of a trapezoidal curve herein, it may be set in the form of a triangular curve having no constant speed zone (SB), depending on the moving distance of the retaining mechanism unit 7.

In the optimum speed distribution, the deceleration in the deceleration zone (SC) is represented by a sigmoidal curve as indicated by solid line in FIGURE 4 in which the deceleration gradients of the initial stage and final stage are more moderate than that of the intermediate stage. Specifically, in the deceleration zone (SC), deceleration is gradually carried out at the initial and final stages. The vibration of the retaining mechanism unit 7 at the time of stopping can be restricted by gradually decelerating the unit 7 at the final stage of the deceleration zone, and further, the vibration during deceleration can be restricted by gradually decelerating the unit 7 at the initial stage of the deceleration zone so that the vibration of the unit 7 at the time of stopping can be much more restricted.

In this example, the acceleration in the acceleration zone (SA) is represented by a sigmoidal curve in which the acceleration gradients of the initial stage and final stage are more moderate than that of the intermediate stage, so that acceleration is also gradually carried out at the initial stage and final stage of the acceleration zone (SA). The optimum speed distribution calculated herein is once stored in the RAM 3 or in the internal memory of the CPU 1.

At Step S7, the retaining mechanism unit 7 holding the molded product is moved to the retrieving position (D) and after liberating the molded product, the retaining mechanism unit 7 is returned to the initial waiting position (A).

In the take-out operation (i.e., the succeeding process) after the initializing operation (i.e., the preceding process), a take-out signal instructing take-out of the molded product is outputted (Step S8) after die opening and then, the moving mechanism unit 5 is activated (Step S9) according to the optimum speed distribution calculated in Step S6 to move the retaining mechanism unit 7 from the waiting position (A) to the take-out position (B) for the penetration process ①. At that time, the optimum speed distribution stored in the RAM 3 or in the internal memory of the CPU 1 is read out and the positioning controller 11 allows this distribution to be input in the servo driver 51 of the moving mechanism unit 5 as the speed command signal (a).

As described above, in the molded product take-out apparatus of the first embodiment, the moving mechanism unit 5 is activated according to the optimum speed distribution in the penetration process ① whereby the vibration of the retaining mechanism unit 7 when stopping at the take-out position (B) can be restricted. In addition, the optimum speed distribution is arranged such that the deceleration gradients of the initial stage and final stage of the deceleration zone (SC) are more moderate than that of the intermediate zone to form a sigmoidal curve, whereby deceleration at the initial and final stages of the deceleration zone (SC) can be gradually carried out. In this way, the vibration of the retaining mechanism unit 7 at the time of stopping can be restricted by gradually decelerating the unit 7 at the final stage of the deceleration zone (SC), and further, the vibration during deceleration can be restricted by gradually decelerating the unit 7 at the initial stage of the deceleration zone (SC) so that the vibration of the unit 7 at the time of stopping can be much more restricted. Accordingly, not only can the take-out of the molded product be more accurately and reliably carried out but also the die halves can be prevented from damage which would be caused due to the vibration of the retaining mechanism unit 7.

While the take-out position (B) is set as the specified stopping position and the optimum speed distribution is associated with the moving speed of the penetration process ① in which the retaining mechanism unit 7 moves from the waiting position (A) to the take-out position (B) in the first embodiment, the optimum speed distribution may be calculated for the withdrawal process ③, the conveyance process ④ or the return process ⑥. By moving the retaining mechanism unit 7 according to the optimum speed distribution in the conveyance process ④, the molded product can be accurately and reliably liberated at the retrieving position (D) so that when the molded product is stacked for retrieval, stacking can be properly carried out. By moving the retaining mechanism unit 7 is moved according to the optimum speed distribution in the withdrawal process ③, the vibration of the retaining mechanism unit 7 at the withdrawing position (C) can be restricted so that there is no need to worry about falling of the molded product from the pick-up head 72. Further. By moving the retaining mechanism unit 7 is moved according to the optimum speed distribution in the return process ⑥, the vibration of the retaining mechanism unit 7 at the waiting position (A) can be restricted so that the retaining mechanism unit 7 does not touch the die halves when it penetrates between the die halves.

The optimum speed distribution may be arranged such that the maximum speed in the constant speed zone (B) is set to be low, provided that the area of the region enclosed by the curve representative of the optimum speed distribution is equal to the area of the region enclosed by the curve set by the initializing operation.

### [Second Embodiment]

In order to move the retaining mechanism unit 7 at the moving speed according to the speed command signal (a) sent from the positioning controller 11, the first embodiment is arranged such that the servo driver 51 and the servo motor 52 constitute a loop circuit and the servo driver 51 compares the rotational frequency data (c) fed back from the servo motor 52 with the speed command signal (a) from the positioning controller 11 to execute feed back control so as to eliminate an error in the rotational frequency of the servo motor 52. However, even though an error in the rotational frequency of the servo motor 52 becomes minute or almost eliminated by controlling the rotational frequency of the servo motor 52 by the feed back control, the retaining mechanism unit 7 does not always move at the preset moving speed because of a tangle of various disturbance factors such as the strength of the arm mechanism unit 71 of the retaining mechanism unit 7, the area of the pick-up head 72, and the strokes of the lateral moving mechanism units 53, 54 and lifting/lowering mechanism unit 55 of the moving mechanism unit 5.

Taking this into account, the second embodiment of the invention is designed such that the moving speed for the retaining mechanism unit 7 is not indirectly obtained by calculation from the rotational frequency of the servo motor 52, but the moving speed of the pick-up head 72 of the retaining mechanism unit 7 is directly measured to move the retaining mechanism unit 7 at a setting of moving speed.

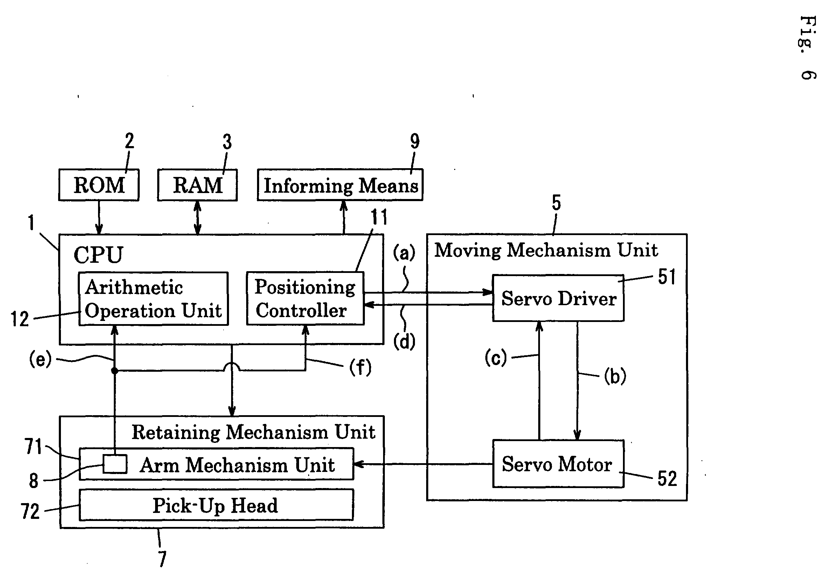

FIGURE 6 is a block diagram showing the inner structure of the molded product take-out apparatus constructed according to the second embodiment.

In the second embodiment, the vibration detecting means 8 of the first embodiment attached to the distal end of the arm mechanism unit 71 is used as an acceleration sensor 81 and speed data (f) which is representative of the moving speed of the retaining mechanism unit 7 and sent from the acceleration sensor 81 is fed back to the positioning controller 11 thereby performing feed back control in order to move the retaining mechanism unit 7 in accordance with the optimum speed distribution described in the first embodiment. One example of the acceleration sensor 81 is a piezo-electric acceleration sensor which is used as the vibration sensor 8 described in the first embodiment.

Specifically, in the second embodiment, the positioning controller 11, the moving mechanism unit 5 and the retaining mechanism unit 7 constitute a loop circuit. In the penetration process ① for example, the positioning controller 11 performs signal processing on the difference between the optimum speed distribution (the distribution of moving speed in the penetration process ①) calculated by the arithmetic operation unit 12 at the time of the initializing operation (i.e., the preceding process) and the speed data (f) fed back from the acceleration sensor 81 attached to the arm mechanism unit 71 and amplifies the difference signal to be input to the servo driver 51 of the moving mechanism unit 5 as a speed command signal (a). Then, the servo motor 52 is driven according to the speed command signal (a) and the retaining mechanism unit 7 is feed-back controlled so that its actual moving speed invariably complies with the optimum speed distribution.

With this arrangement, the retaining mechanism unit 7 is always moved at moving speed according to the optimum speed distribution in the penetration process ①. It should be noted that the same feed back control can be performed in other processes (e.g., the withdrawal process and conveyance process).

According to the second embodiment, the moving speed of the retaining mechanism unit 7 is directly measured by the acceleration sensor 81 attached to the distal end of the arm mechanism unit 71 of the retaining mechanism unit 7 as described earlier, so that the moving speed of the retaining mechanism unit 7 is detected more accurately than the case the moving speed of the retaining mechanism unit 7 is indirectly obtained by calculation from the rotational frequency of the servo motor 52. In addition, the speed command signal (a) outputted from the positioning controller 11 is fed back based on data on the actual moving speed detected by the acceleration sensor 81, so that the speed command signal (a) which scarcely deviates from the actual moving speed can be supplied to the servo driver 51. Therefore, the retaining mechanism unit 7 can be moved at the moving speed in accordance with the speed command signal (a) sent from the positioning controller 11, without being affected by disturbances other than the servo motor 52.

### [Third Embodiment]

In the event of an abnormality such as inadequate attachment of the pick-up head 72 or looseness in the moving mechanism unit 5 or in the retaining mechanism unit 7, the feed back control based on the speed data (f) fed back from the acceleration sensor 81 cannot reduce the vibration of the retaining mechanism unit 7 when stopping. In this case, it is necessary to immediately find out the cause of the abnormality and provide maintenance for the apparatus.

The third embodiment is designed so as to cope with occurrence of such an abnormality. The take-out apparatus of the third embodiment is constructed by providing the take-out apparatus of the second embodiment with an informing means 9 which is connected to the CPU 1 as shown in FIGURE 6 and informs the operator of occurrence of an abnormality. More specifically, in cases where the vibrating condition is not alleviated even after the feed back control is performed by feeding back the speed data (f) from the acceleration sensor 81, or in cases where even though the vibrating condition is alleviated, the degree of alleviation is extremely small (for instance, the case where the maximum vibration value explained in the first embodiment does not fall within the specified range), or in cases the vibrating condition continues a plurality of times even when the feed back control is performed several times, it is determined that an abnormality has occurred in the apparatus so that the CPU 1 outputs an informing command signal to the informing means 9. In response to the informing command signal, the informing means 9 informs the operator of the occurrence of an abnormality by means of an abnormality lamp, abnormality buzzer or the like. It is also possible to provide the informing means 9 with a display panel for displaying which process is abnormal. This enables it to promptly cope with an abnormality in the apparatus, leading to shortening of the downtime of the apparatus and prevention of decreases in operating efficiency.

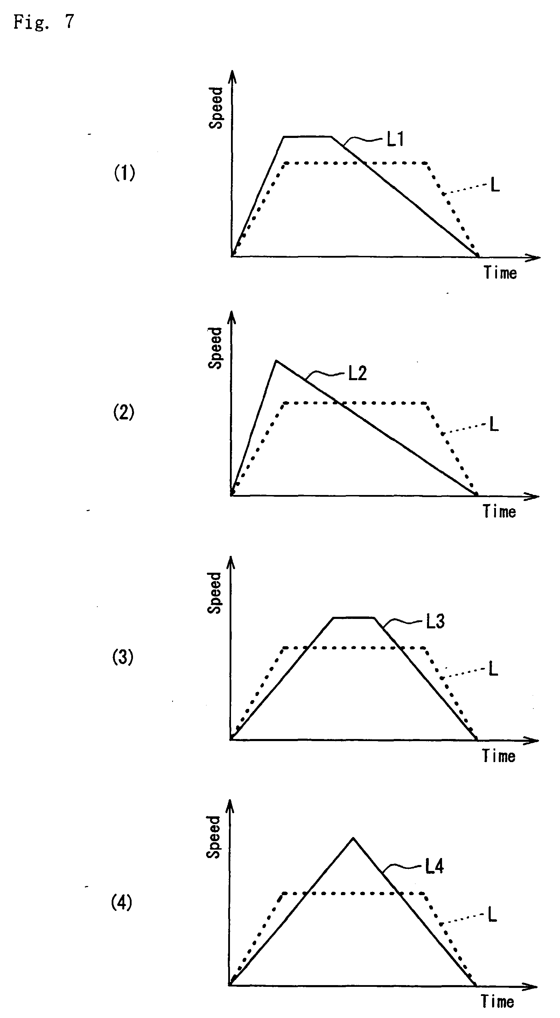

While the optimum speed distribution is calculated so as to take the form of a sigmoidal curve in the first to third embodiments, it may be in other forms provided that the vibration of the retaining mechanism unit 7 when stopping can be restricted. For instance, the optimum speed distribution may take such a form that the gradient of deceleration is moderated stepwise. Examples of other possible forms for the optimum speed distribution are shown in FIGURE 7: (i) trapezoidal curve L1 (FIGURE 7(1)) in which the deceleration zone diagonally descending to the right forms a gentle gradient; (ii) triangular curve L2 (FIGURE 7(2)) in which the deceleration zone diagonally descending to the right forms a much gentler gradient and which does not have a flat constant speed zone; (iii) trapezoidal curve L3 (FIGURE 7(3)) in which the acceleration zone diagonally ascending to the right and the deceleration zone diagonally descending to the right respectively form a gentle gradient; (iv) triangular curve L4 (FIGURE 7(4)) in which the acceleration zone diagonally ascending to the right and the deceleration zone diagonally descending to the right respectively form a gentle gradient and which does not have a flat constant speed zone.

Since the moving distance and moving time of the retaining mechanism unit 7 are unchanged, the area and base length of the region enclosed by each curve L1, L2, L3 or L4 should be equal to those of the region enclosed by the trapezoidal curve L (indicated by dot line in FIGURE 7) set in the initializing operation.

The invention is applicable to all types of molding machines that require take-out of a molded product after die opening, examples of which are an injection molding machine for producing resinous molded products and an injection molding machine for producing magnesium or alumina molded products.

An apparatus for taking out a molded product in which a molded product is taken out after die opening and liberated at a specified retrieving position outside die halves, the apparatus comprising: a vibration sensor 8 for detecting the vibrating condition of the retaining mechanism unit 7 when the retaining mechanism unit 7 stops at a stopping position for the retaining mechanism unit 7 in a preceding process; an arithmetic operation unit 12 for calculating an optimum speed distribution which restricts the vibrating condition; and a positioning controller 11 for activating the moving mechanism unit 5 so as to move the retaining mechanism unit 7 according to the optimum speed distribution in a process succeeding the preceding process, whereby the vibration of the retaining mechanism unit, which occurs when the retaining mechanism unit holding the molded product stops at a specified stopping position, is restricted.

## Claims

1. An apparatus for taking out a molded product which comprises a retaining mechanism unit for holding a molded product and a moving mechanism unit for moving the retaining mechanism unit and in which the retaining mechanism unit is allowed to penetrate between die halves from a specified waiting position after die opening to take out a molded product and the molded product is liberated at a specified retrieving position outside the die halves, the apparatus comprising:
vibration detecting means for detecting the vibrating condition of the retaining mechanism unit when the retaining mechanism unit stops at a stopping position for the retaining mechanism unit in a preceding process;
arithmetic means for calculating an optimum speed distribution as a speed distribution of the retaining mechanism unit when moving from a movement starting position to the stopping position, the optimum speed distribution restricting the maximum vibration value of the retaining mechanism unit in a vibrating condition within a specified range; and
instructing means for activating the moving mechanism unit so as to move the retaining mechanism unit according to the optimum speed distribution in a process succeeding the preceding process.

2. An apparatus for taking out a molded product according to claim 1,
wherein the retaining mechanism unit comprises an arm mechanism unit coupled to the moving mechanism unit and a molded product pick-up head attached to the distal end of the arm mechanism unit, and
wherein the vibration detecting means is attached to the distal end of the arm mechanism unit so as not to interfere with the attachment of the pick-up head.

3. An apparatus for taking out a molded product according to claim 1, wherein the optimum speed distribution calculated by the arithmetic means is arranged such that deceleration gradients of the initial and final stages of a deceleration zone are gentler than that of the intermediate stage of the deceleration zone.

4. An apparatus for taking out a molded product according to claim 1, wherein the vibration detecting means is a piezo-electric type acceleration sensor having a piezo-electric element for outputting an electric signal proportional to the acceleration of an object to be measured.

5. An apparatus for taking out a molded product according to claim 1, wherein the vibration detecting means is a capacitance type vibration sensor for detecting the displacement amount of an object to be measured from the capacitance of a capacitor.

6. An apparatus for taking out a molded product according to claim 1, wherein the vibration detecting means is an eddy current type vibration sensor for detecting the displacement amount of an object to be measured from the eddy current of a coil to which a high frequency current flows.

7. An apparatus for taking out a molded product according to claim 1, wherein the vibration detecting means is a laser type vibration sensor for detecting the displacement amount of an object to be measured from the convergence point of a laser.

8. An apparatus for taking out a molded product according to claim 1, wherein the vibration detecting means is a microminiature camera for detecting a picture image.

9. An apparatus for taking out a molded product according to claim 1, wherein the speed distribution calculated by the arithmetic means is represented by a trapezoidal curve constituted by an acceleration zone diagonally ascending to the right, a flat constant speed zone and a deceleration zone diagonally descending to the right.

10. An apparatus for taking out a molded product according to claim 1, wherein the speed distribution by the arithmetic means is represented by a triangular curve constituted by an acceleration zone diagonally ascending to the right and a deceleration zone diagonally descending to the right.

11. An apparatus for taking out a molded product according to claim 9, wherein the optimum speed distribution calculated by the arithmetic means is set such that the maximum speed of the constant speed zone is lower than the maximum speed of the preceding process.

12. An apparatus for taking out a molded product according to claim 1, which further includes informing means for informing occurrence of an abnormality in the apparatus when the vibrating condition detected by the vibration detecting means in the succeeding process is not alleviated compared to the vibrating condition in the preceding process.

13. An apparatus for taking out a molded product according to claim 1, wherein the optimum speed distribution calculated by the arithmetic means is arranged such that the deceleration gradient of the deceleration zone is moderated stepwise.

14. An apparatus for taking out a molded product according to claim 1, which is applicable to take-out of a molded product in an injection molding machine for producing resinous molded products, magnesium molded products or aluminum molded products.
